# EUROPEAN PATENT SPECIFICATION

(11) **EP 4 043 317 B1**
(45) Date of publication and mention of the grant of the patent: **03.09.2025**
(21) Application number: 19948796.8
(22) Date of filing: 29.10.2019
(51) Int. Cl.: G01M 17/10, B61L 15/00, B61L 25/02

(54) **DIAGNOSTIC METHOD AND APPARATUS FOR SHAFT BREAKAGE FAULT OF RAILWAY VEHICLE**
VERFAHREN UND GERÄT ZUR DIAGNOSE EINES WELLENBRUCHFEHLERS BEI SCHIENENFAHRZEUGEN
PROCÉDÉ ET APPAREIL DE DIAGNOSTIC POUR DÉFAUT DE RUPTURE D'ARBRE DE VÉHICULE FERROVIAIRE

(30) Priority: 08.10.2019 CN 201910949607
(43) Date of publication of application: 17.08.2022
(73) Proprietor: Zhuzhou CRRC Times Electric Co., Ltd., Zhuzhou, Hunan 412001 (CN)
(72) Inventor: XU, Shaolong, Zhuzhou, Hunan 412001 (CN); LI, Xueming, Zhuzhou, Hunan 412001 (CN); JIANG, Fengbing, Zhuzhou, Hunan 412001 (CN); GAN, Weiwei, Zhuzhou, Hunan 412001 (CN); GUO, Wei, Zhuzhou, Hunan 412001 (CN); LIAO, Liang, Zhuzhou, Hunan 412001 (CN); YUAN, Jing, Zhuzhou, Hunan 412001 (CN); PENG, Hui, Zhuzhou, Hunan 412001 (CN); CHEN, Zhibo, Zhuzhou, Hunan 412001 (CN); HUANG, Qing, Zhuzhou, Hunan 412001 (CN)
(74) Representative: Peters, Sebastian Martinus
(86) International application number: PCT/CN2019/113979
(87) International publication number: WO 2021/068302

(56) References cited:
- WO-A1-2019/081770
- CN-A- 102 803 045
- CN-A- 104 773 190
- CN-A- 105 043 761
- CN-A- 108 216 168
- CN-A- 109 835 371
- DE-B4- 10 159 957
- US-A1- 2009 254 239
- US-A1- 2014 163 785
- US-A1- 2018 222 504

## Description

### Technical Field

The present invention relates to a broken axle fault diagnosis technology of a rail vehicle, in particular to a diagnostic method for broken axle faults of a rail vehicle, a diagnostic device for broken axle faults of a rail vehicle, and a computer-readable medium.

### Background

In the field of rail transit, the stress conditions of the train wheels and axles are very complicated and severe, cracks and even broken axles occur from time to time. If the train runs with a broken axle for a long time, there is a major safety hazard that will cause the train to derail and subvert. Therefore, the present invention proposes an on-line diagnostic method for broken axle faults of a rail vehicle, which can realize rapid and accurate diagnosis of the sudden broken axle faults of the train during operation of the train and prompt the driver, consequently to ensure the safe operation of the train.

US 2018 0222504 Al describes the placing of tachometer sensors next to each wheel for detecting a broken or failing axle. In addition, WO 2019 081770 Al describes the use of an accelerometer to an axle of a wheelset assembly of a railway vehicle. US 2014 0163785 A1 discloses an apparatus and method for detecting slide slip of the wheels of a railcar against the rails, and US 2009 0254239 A1 discloses a system and method for detecting a defect such as a wheel slip incident or a locked axle incident of a rail vehicle system.

At present, the broken axle detection technology of the "Harmony" and "Fuxing" multiple units mainly includes ultrasonic penetration scanning of the train axles and inspection of the cracks in the axle embeddings during the overhaul of the train's return section. However, limited by the impact of the accuracy of the testing equipment and the difference in the broken-detection level of the maintenance personnel, the existing detection technology often appears missed detection and false detection. Moreover, the existing detection technology is confined to perform after the train returns to the depot, cannot detect and remind the driver to deal with the broken axle faults when the train is running on the line, thus causing hidden dangers to people's lives and property safety.

Therefore, in order to overcome the above-mentioned shortcomings in the prior art, there is an urgent need in the art for an online broken axle faults diagnosis technology of a rail vehicle, used to report faults quickly and accurately, so as to ensure the safe operation of trains.

### Summary

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to overcome the above-mentioned shortcomings in the prior art, the present invention provides a computer implemented diagnostic method for broken axle faults of a rail vehicle, a diagnostic device for broken axle faults of a rail vehicle, and a computer-readable medium, used to report faults quickly and accurately, so as to ensure the safe operation of trains.

The above-mentioned diagnostic method for broken axle faults of a rail vehicle provided by the present invention does not need to add any hardware equipment, can collect the train speed, traction and other information in real time through the Train Control and Management System. When a broken axle fault occurs during the operation of the rail vehicle, the diagnostic device for broken axle faults of the rail vehicle can report the fault quickly and accurately.

The above-mentioned diagnostic method for broken axle faults of a rail vehicle provided by the present invention, may be used for diagnosing broken axle faults of a plurality of axles of the rail vehicle. The diagnostic method comprises the steps: judging the operating condition of the rail vehicle; and in response to the rail vehicle being in the traction operating condition, using one of the plurality of axles as the axle to be tested to perform a first broken axle condition judgment. The first broken axle condition may comprise: the actual traction force of the other axles except the one to be tested is all greater than the first traction threshold, while the actual traction force of the axle to be tested has been continuously smaller than the second traction threshold and the axle speed of the axle to be tested has been continuously greater than the speed of the rail vehicle for up to a first time threshold. If the first broken axle condition is satisfied, it is judged that the axle to be tested is suspected of having a broken axle fault.

Optionally, in the above-mentioned diagnostic method for broken axle faults of a rail vehicle provided by the present invention, the method may further comprise the steps: in response to the rail vehicle being in an inert operating condition or a braking operating condition, performing a second broken axle condition judgment on the axle to be tested. The second broken axle condition may comprise: the axle speed of the axle to be tested has been continuously lower than the speed of the rail vehicle for up to a second time threshold. If the second broken axle condition is satisfied, it is judged that the axle to be tested is suspected of having a broken axle fault.

Optionally, in the above-mentioned diagnostic method for broken axle faults of a rail vehicle provided by the present invention, the method may further comprise the steps: if it is judged that the axle to be tested is suspected of having a broken axle fault, then performing the first broken axle condition judgment on the axle to be tested again during the stop and restart process. If the first broken axle condition is satisfied, it is confirmed that the axle to be tested has a broken axle fault.

Optionally, in the above-mentioned diagnostic method for broken axle faults of a rail vehicle provided by the present invention, the method may further comprise the steps: if the first broken axle condition is not satisfied, waiting for the next stop and restart process to perform the first broken axle condition judgment again.

Optionally, in the above-mentioned diagnostic method for broken axle faults of a rail vehicle provided by the present invention, the method may further comprise the steps: if the second broken axle condition is not satisfied, it is ruled out that the axle to be tested has a broken axle fault.

Optionally, in the above-mentioned diagnostic method for broken axle faults of a rail vehicle provided by the present invention, wherein in the first broken axle condition the other axles except the one to be tested may exclude axles that have been judged to have a broken axle fault.

Optionally, in the above-mentioned diagnostic method for broken axle faults of a rail vehicle provided by the present invention, the method may further comprise the steps: before performing the first broken axle condition judgment on the axle to be tested, first it is judged whether the axle to be tested has a speed sensor fault, if it has a speed sensor fault, not performing broken axle diagnosis on it.

Optionally, in the above-mentioned diagnostic method for broken axle faults of a rail vehicle provided by the present invention, wherein the first traction threshold may comprise 60% of the maximum traction that can be exerted by an axle at the current rail vehicle speed, the second traction threshold may comprise 20% of the maximum traction that can be exerted by an axle at the current rail vehicle speed.

Optionally, in the above-mentioned diagnostic method for broken axle faults of a rail vehicle provided by the present invention, wherein the axle speed is greater than the speed of the rail vehicle may comprise that the axle speed is greater than the speed of the rail vehicle by more than 5km/h, the axle speed is lower than the speed of the rail vehicle may comprise that the axle speed is lower than the speed of the rail vehicle by more than 5km/h.

Optionally, in the above-mentioned diagnostic method for broken axle faults of a rail vehicle provided by the present invention, wherein the first time threshold and the second time threshold may comprise 10s.

According to another aspect of the present invention, this article also provides a diagnostic device for broken axle faults of a rail vehicle.

The above-mentioned diagnostic device for broken axle faults of a rail vehicle provided by the present invention, used for diagnosing broken axle faults of a plurality of axles of the rail vehicle. The diagnostic device comprises: a memory; and a processor coupled to the memory, the processor is configured for: judging the operating condition of the rail vehicle; and in response to the rail vehicle being in the traction operating condition, using one of the plurality of axles as the axle to be tested to perform a first broken axle condition judgment. The first broken axle condition may comprise: the actual traction of the other axles except the one to be tested is all greater than the first traction threshold, while the actual traction of the axle to be tested has been continuously smaller than the second traction threshold and the axle speed has been continuously greater than the speed of the rail vehicle for up to a first time threshold. If the first broken axle condition is satisfied, it is judged that the axle to be tested is suspected of having a broken axle fault.

Optionally, in the above-mentioned diagnostic device for broken axle faults of a rail vehicle provided by the present invention, the processor may be further configured for: in response to the rail vehicle being in an inert operating condition or a braking operating condition, performing a second broken axle condition judgment on the axle to be tested. The second broken axle condition may comprise: the axle speed of the axle to be tested has been continuously lower than the speed of the rail vehicle for up to a second time threshold. If the second broken axle condition is satisfied, it is judged that the axle to be tested is suspected of having a broken axle fault.

Optionally, in the above-mentioned diagnostic device for broken axle faults of a rail vehicle provided by the present invention, the processor may be further configured for: if it is judged that the axle to be tested is suspected of having a broken axle fault, then performing the first broken axle condition judgment on the axle to be tested again during the stop and restart process. If the first broken axle condition is satisfied, it is confirmed that the axle to be tested has a broken axle fault.

Optionally, in the above-mentioned diagnostic device for broken axle faults of a rail vehicle provided by the present invention, the processor may be further configured for: if the first broken axle condition is not satisfied, waiting for the next stop and restart process to perform the first broken axle condition judgment again.

Optionally, in the above-mentioned diagnostic device for broken axle faults of a rail vehicle provided by the present invention, the processor may be further configured for: if the second broken axle condition is not satisfied, it is ruled out that the axle to be tested has a broken axle fault.

Optionally, in the above-mentioned diagnostic device for broken axle faults of a rail vehicle provided by the present invention, wherein in the first broken axle condition the other axles except the one to be tested may exclude axles that have been judged to have a broken axle fault.

Optionally, in the above-mentioned diagnostic device for broken axle faults of a rail vehicle provided by the present invention, the processor may be further configured for: before performing the first broken axle condition judgment on the axle to be tested, first it is judged whether the axle to be tested has a speed sensor fault, if it has a speed sensor fault, not performing broken axle diagnosis on it.

Optionally, in the above-mentioned diagnostic device for broken axle faults of a rail vehicle provided by the present invention, wherein the first traction threshold may comprise 60% of the maximum traction that can be exerted by an axle at the current rail vehicle speed, the second traction threshold may comprise 20% of the maximum traction that can be exerted by an axle at the current rail vehicle speed.

Optionally, in the above-mentioned diagnostic device for broken axle faults of a rail vehicle provided by the present invention, wherein the axle speed is greater than the speed of the rail vehicle may comprise that the axle speed is greater than the speed of the rail vehicle by more than 5km/h, the axle speed is lower than the speed of the rail vehicle may comprise that the axle speed is lower than the speed of the rail vehicle by more than 5km/h.

Optionally, in the above-mentioned diagnostic device for broken axle faults of a rail vehicle provided by the present invention, wherein the first time threshold and the second time threshold may comprise 10s.

According to another aspect of the present invention, the article also provides a computer-readable medium.

The above-mentioned computer-readable medium provided by the present invention, whereon storing computer-executable instructions. When the computer-executable instructions are executed by a processor, they can implement any of the above-mentioned diagnostic methods for broken axle faults of a rail vehicle, used to report faults quickly and accurately, thereby to ensure the safe operation of the train.

### Brief Description of the Drawings

The above features and advantages of the present invention will be better understood after reading the detailed description of the embodiments of the present disclosure in conjunction with the following figures. In the figures, components are not necessarily drawn to scale, and components having similar related features may have the same or similar reference numerals.
Fig. 1 shows a schematic flowchart of the diagnostic method for broken axle faults of a rail vehicle according to an aspect of the present invention.
Fig. 2 shows a schematic structural diagram of a six-axle rail vehicle according to an embodiment of the present invention.
Fig. 3 shows a schematic diagram of the principle of adhesion control according to an embodiment of the present invention.
Fig. 4 shows a schematic flowchart of the diagnostic method for broken axle faults of a rail vehicle according to an embodiment of the present invention.
Fig. 5 shows a schematic diagram of a simulation result of a broken axle fault of a rail vehicle according to an embodiment of the present invention.
Fig. 6 shows a schematic structural diagram of a diagnostic device for broken axle faults of a rail vehicle according to another aspect of the present invention.

### Reference signs

- 101-102: the steps of the diagnostic method for broken axle faults of a rail vehicle;
- 21: traction transformer;
- 22: traction converter;
- 23: traction motor;
- 241-246: axle;
- 61: memory;
- 62: processor.

### Detailed Description of Embodiments

The embodiments of the present invention are described in the following detailed description. Other advantages and effects of the present invention will be readily apparent to those skilled in the art from this disclosure. Although the description of the present invention will be described in conjunction with the preferred embodiments, this is not a limitation of the present invention. On the contrary, the invention is described in connection with the embodiments so as to cover other alternatives or modifications that are possible in the embodiments of the present invention. In order to provide a thorough understanding of the present invention, many specific details are included in the following description. The present invention may also be practiced without these details. In addition, some specific details are omitted in the description in order to avoid confusing or obscuring the present invention.

In the description of the present invention, it should be noted that the terms "installation", "connecting", and "connected" should be understood broadly unless explicitly stated and defined otherwise. For example, the terms "installation", "connecting", and "connected" may be either a fixed connection, a detachable connection, or an integral connection; the terms may be either a mechanical connection or an electrical connection; the terms also may be either a direct connection, an indirect connection through an intermediate medium, or an internal connection between two components. The specific meaning of the above terms in the present invention can be understood in a specific case by those skilled in the art.

In addition, "up", "down", "left", "right", "top", "bottom", "horizontal", "vertical" used in the following description shall be understood as the orientation described in the paragraph and shown in the related figure. The relative term is used for convenience of description only, and does not mean that the device described therein is to be manufactured or operated in the specific orientation, and therefore should not be construed as limiting the present invention.

Understandably, although the terms "first", "second", "third", etc. may be used to describe various components, regions, layers and/or portions to distinguish different components, regions, layers and/or portions, the order of these components, regions, layers and/or portions described above should not be limited by the terms. Therefore, a first component, region, layer and/or portion mentioned below may be also mentioned as a second component, region, layer and/or portion without departing from some embodiments of the present invention.

In order to overcome the above-mentioned shortcomings in the prior art, the present invention provides an embodiment of a diagnostic method for broken axle faults of a rail vehicle, an embodiment of a diagnostic device for broken axle faults of a rail vehicle, and an embodiment of a computer-readable medium, used to report faults quickly and accurately, so as to ensure the safe operation of trains.

The diagnostic method for broken axle faults of a rail vehicle provided in this embodiment does not need to add any hardware equipment, can collect the train speed, traction and other information in real time through the Train Control and Management System (TCMS), so as to diagnose broken axle faults of multiple axles of a rail vehicle. When a broken axle fault occurs during the operation of a rail vehicle, the diagnostic device for broken axle faults of the rail vehicle can report the fault quickly and accurately.

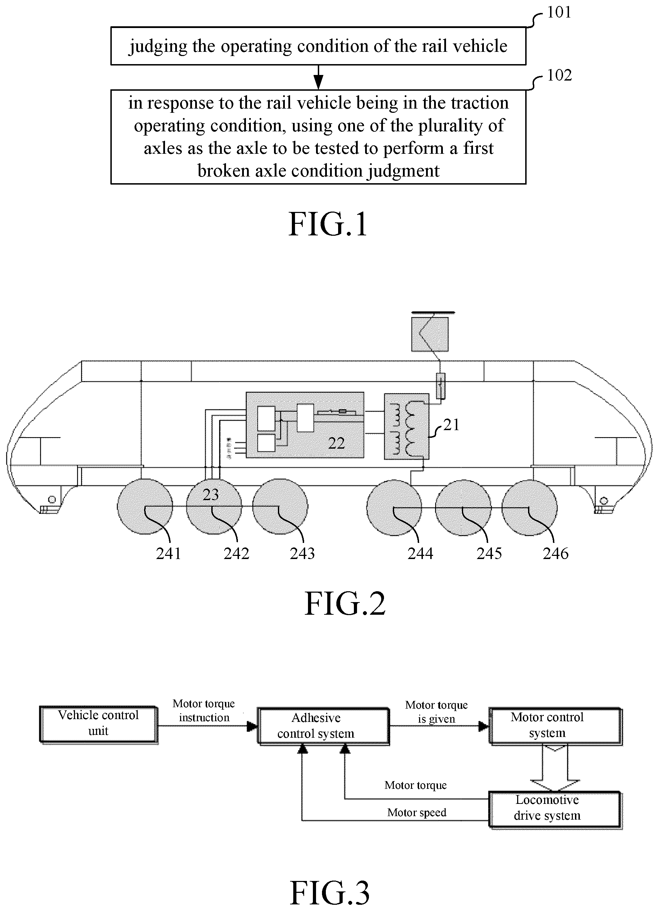

Please refer to Fig. 1, Fig. 1 shows a schematic flowchart of the diagnostic method for broken axle faults of a rail vehicle according to an aspect of the present invention.

As shown in Fig. 1, the above-mentioned diagnostic method for broken axle faults of a rail vehicle provided in this embodiment may comprise the steps:
101: judging the operating condition of the rail vehicle.

The above-mentioned rail vehicles comprise but are not limited to locomotives, high-speed trains, urban rail transit, and other off-road engineering vehicles. The above-mentioned rail vehicles are directly driven by steam engines, diesel engines, gas turbines, traction motors and other power machinery or driven by transmission devices, using the power generated by steam engines, diesel engines, traction motors or other power machinery, and driving the wheels through transmission devices of the rail vehicle, with the help of the adhesion between the driving wheels and the rails to generate the driving force, that is, the traction of the rail vehicle. The traction generated by the rail vehicle can overcome the resistance of the train, thereby dragging a train that is over 10 or 20 times heavier than its own weight.

The operating conditions of the above-mentioned rail vehicles comprise but are not limited to traction operating conditions, inert operating conditions and braking operating conditions. Under traction conditions, the rail vehicle can drive the entire train to run by generating the above-mentioned traction of the rail vehicle. In inert operating conditions, the rail vehicle may not generate traction of the rail vehicle, so that it can keep running or stop inertly following the current motion state of the entire train. Under braking conditions, the rail vehicle can generate braking force to keep the entire train at a standstill.

In one embodiment, the rail vehicle may collect the operating status information of the rail vehicle in real time through the TCMS, and judge the operating condition of the rail vehicle based on the operating status information.

Please refer to Fig. 2, Fig. 2 shows a schematic structural diagram of a six-axle rail vehicle according to an embodiment of the present invention.

As shown in FIG. 2, the above-mentioned six-axle rail vehicle provided in this embodiment may comprise a traction transformer 21, a traction converter 22, and a traction motor 23 for providing traction force of the rail vehicle. A train control system TCMS can be installed on the rail vehicle. The TCMS can receive the control commands of the driver, and transmit these control commands to the traction transformer 21, the traction converter 22, and the traction motor 23 of the rail vehicle, so as to realize the control requirements of the driver. The TCMS can also collect the operating status information of the rail vehicle in real time, so as to monitor the operating status of the rail vehicle in real time. When an abnormal condition of the rail vehicle is detected, the TCMS can protect the rail vehicle in time and remind the driver of the rail vehicle through the display IDU.

Specifically, the above-mentioned six-axle rail vehicle may comprise 6 wheel sets, and each wheel set may comprise two wheels. The two wheels of each wheel set are connected by an axle, so as to load the weight of the rail vehicle. When the rail vehicle is running, the driver of the rail vehicle can adjust the traction/braking force required by the rail vehicle in real time by manipulating the level of the traction/brake handle. The TCMS can collect positions of the traction/brake handle to determine whether the rail vehicle needs traction or braking currently, thereby judging the current operating condition of the rail vehicle.

Furthermore, the TCMS may calculate the current required traction/braking force by collecting positions of the traction/brake handle. After that, the TCMS can distribute the current traction or braking conditions of the rail vehicle, as well as the required traction/braking force to the six axles of the rail vehicle, so as to achieve the control requirements of the driver. At the same time, the TCMS can further collect the current actual speed and actual traction force of each axle of the rail vehicle, which is used to diagnose broken axle faults of the rail vehicle.

As shown in FIG. 1, in the above-mentioned diagnostic method for broken axle faults of a rail vehicle provided in this embodiment, the method may further comprise the steps:
102: in response to the rail vehicle being in the traction operating condition, using one axle 241 of the plurality of axles 241-246 as the axle to be tested to perform a first broken axle condition judgment.

The above-mentioned first broken axle condition may specifically comprise: (1) The actual traction of the other axles 242-246 except the axle to be tested 241 is all greater than the first traction threshold; (2) The actual traction of the axle to be tested 241 has been continuously smaller than the second traction force for up to a first time threshold; (3) The axle speed has been continuously greater than the speed of the rail vehicle for up to the first time threshold.

In the case of normal operation of the rail vehicle, when the rail vehicle is towed with a strong torque, the actual torque of each axle 241-246 can normally follow the given traction provided by the driver to increase or decrease. In the case of poor line conditions, although the axle of the rail vehicle idles occasionally, the idling phenomenon only appears briefly, and the speed of the axle is greater than the actual operating speed of the rail vehicle during idling.

In the same way, in the case of normal operation of the rail vehicle, when the rail vehicle brakes with high torque, the actual torque of each axle 241-246 can also normally follow the given brakeage provided by the driver to increase or decrease. In the case of poor line conditions, although the axle of the rail vehicle skids occasionally, the skidding phenomenon only appears briefly, and the speed of the axle is lower than the actual operating speed of the rail vehicle during skidding.

However, when a certain axle of the rail vehicle has a broken axle fault, the speed of the broken axle of the rail vehicle is basically under the adhesion control. The broken axle of the rail vehicle are prone to idling in traction conditions and skidding in braking conditions, and its speed will gradually drop to zero after being blocked.

Therefore, the above-mentioned diagnostic method for broken axle faults of a rail vehicle provided by this embodiment can make use of the features that the broken axle of the rail vehicle is prone to idling in traction conditions, skidding in braking conditions, and the speed gradually drops to zero to diagnose broken axle faults of the rail vehicle online.

Please refer to Fig. 3, Fig. 3 shows a schematic diagram of the principle of adhesion control according to an embodiment of the present invention.

As shown in Figure 3, the above-mentioned adhesion control can be a part of rail vehicle control. Its main function is to collect information such as motor speed, motor torque, etc., to generate a suitable target motor torque when the line condition is variable, so that the rail vehicle can run at the current maximum adhesion utilization rate, so as to obtain the maximum rail vehicle traction.

In one embodiment, the above-mentioned first traction threshold may be 60% of the maximum traction that can be exerted by an axle at the current rail vehicle speed, that is, 30 kilo newtons (KN). The above-mentioned second traction threshold may be 30% of the maximum traction that can be exerted by an axle at the current rail vehicle speed, that is, 15KN. The above-mentioned first time threshold may be 10 seconds (s).

During the running of the rail vehicle, the TCMS may collect positions of the traction/brake handle to determine whether the rail vehicle needs traction or braking currently, so as to determine the current operating condition of the rail vehicle. At the same time, the TCMS may also collect the current actual speed and the actual traction exerted of each axle 241-246 of the rail vehicle.

If in traction conditions of the rail vehicle, the actual traction of the other axles 242-246 except the axle to be tested 241 is all greater than 30KN, and the actual traction of the axle to be tested 241 has been continuously less than 15KN, and the axle speed has been continuously greater than the speed of the rail vehicle for up to 10 seconds (s), the diagnostic device for broken axle faults of the rail vehicle can judge that the axle to be tested 241 is suspected of having a broken axle fault.

In a preferred embodiment, the diagnostic device for broken axle faults of the rail vehicle may further require that the axle speed of the axle to be tested 241 needs to be greater than the speed of the rail vehicle by more than 5km/h and above, before judging that the axle to be tested 241 is suspected of having a broken axle fault, so as to further prevent misjudgment caused by measurement errors of different speed sensors.

Those skilled in the art can understand that the above-mentioned 60% of the first traction threshold of 30KN, the above-mentioned 30% of second traction threshold of 15KN, and the above-mentioned first time threshold of 10s are only a specific case of the present invention, which is mainly used to demonstrate the conception of the present invention clearly and to provide a specific solution that is convenient for public to implement, rather than limiting the protection scope of the present invention.

In another embodiment, the above-mentioned first traction threshold may still be set to 60% of the maximum traction that can be exerted by an axle at the current rail vehicle speed, that is, 30KN, and the above-mentioned second traction threshold may be set to 20% of the maximum traction that can be exerted by an axle at the current rail vehicle speed, that is, 10KN.

In other embodiments, based on the conception of the present invention, the diagnostic device for broken axle faults of a rail vehicle can also appropriately adjust the values of the above-mentioned first traction threshold, the second traction threshold, and the first time threshold according to a large amount of experimental data, in order to obtain more accurate diagnosis results.

In one embodiment, the diagnostic device for broken axle faults of a rail vehicle may also perform a second broken axle condition judgment on the axle to be tested 241 in response to the rail vehicle being in an inert operating condition or a braking condition. The above-mentioned second broken axle condition may comprise: the axle speed of the axle to be tested 241 has been continuously lower than the speed of the rail vehicle for up to a second time threshold. The above-mentioned second time threshold may be 10 seconds (s).

If in an inert operating condition or a braking operating condition of the railway vehicle, the axle speed of the axle to be tested 241 has been continuously lower than the speed of the railway vehicle for up to 10s, the diagnostic device for broken axle faults of the railway vehicle can judge that the axle to be tested 241 is suspected of having a broken axle fault.

In a preferred embodiment, the diagnostic device for broken axle faults of a rail vehicle may further require that the axle speed of the axle to be tested 241 needs to be less than the speed of the rail vehicle by more than 5 km/h or above, before judging that the axle to be tested 241 is suspected of having a broken axle fault, so as to further prevent misjudgment caused by measurement errors of different speed sensors.

Those skilled in the art can understand that the above-mentioned second time threshold of 10s is only a specific case of the present invention, which is mainly used to demonstrate the conception of the present invention clearly and to provide a specific solution that is convenient for public to implement, rather than limiting the protection scope of the present invention. In other embodiments, based on the conception of the present invention, the diagnostic device for broken axle faults of a rail vehicle can also appropriately adjust the value of the second time threshold according to a large amount of experimental data to obtain a more accurate diagnosis result.

In another embodiment of the present invention, it further provides a preferred diagnostic method for broken axle faults of a rail vehicle. The preferred diagnostic method for broken axle faults of a rail vehicle can further eliminate the interference factor of the broken axles on the diagnosis result, thereby further improving the accuracy of the diagnosis result.

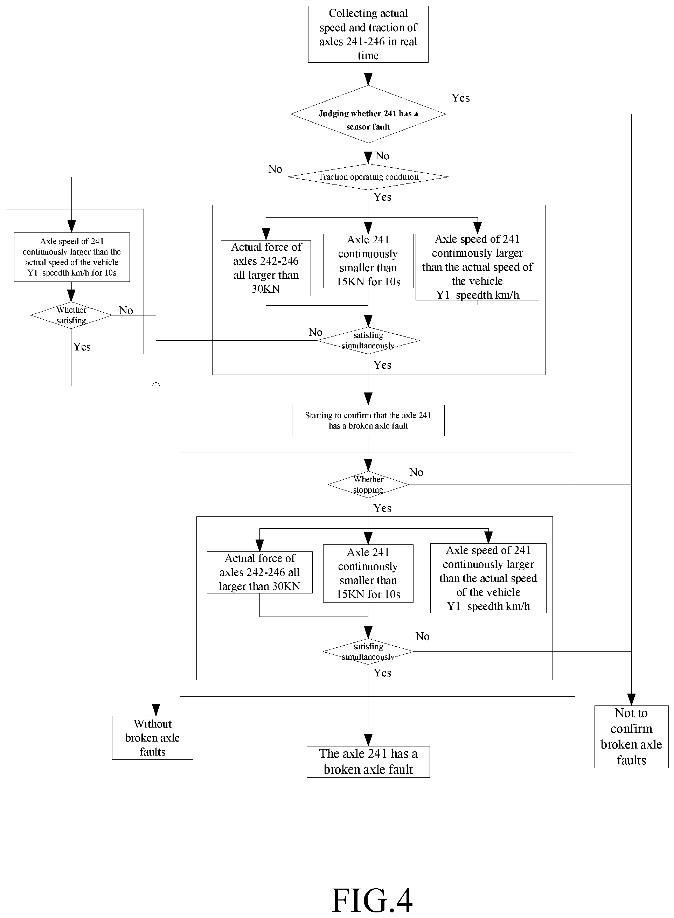

Please refer to Fig. 4, Fig. 4 shows a schematic flowchart of the diagnostic method for broken axle faults of a rail vehicle according to an embodiment of the present invention.

As shown in Fig. 4, in the above-mentioned embodiment, the TCMS can collect the actual speed and traction of each axle 241-246 of the rail vehicle in real time. The diagnostic device for broken axle faults of the rail vehicle can firstly judge whether the axle to be tested 241 has a speed sensor fault. If there is a speed sensor fault on the axle to be tested 241, the broken axle detection of the axle 241 may not be performed temporarily. If there is no speed sensor fault on the axle to be tested 241, the detection can be proceeded.

Because the diagnostic method for broken axle faults of a rail vehicle provided in this embodiment requires to diagnose the broken axle faults of the rail vehicle through collecting train speed, traction and other information, the fault of the speed sensor of the axle to be tested 241 can be checked in advance to avoid misjudgements caused by the sensor failure, and effectively improve the efficiency of diagnosis.

After confirming that there is no speed sensor fault on the axle to be tested 241, the TCMS can collect positions of the traction/brake handle to determine whether the railway vehicle needs traction or braking currently, thereby judging the current operating condition of the railway vehicle.

If it is judged that the rail vehicle is currently in a traction operating condition, the diagnostic device for broken axle faults of the rail vehicle can preliminarily judge whether there is a possibility of a broken axle fault on the axle to be tested 241 according to the above-mentioned first broken axle condition. If the axle to be tested 241 satisfies the above-mentioned first broken axle condition, the diagnostic device for axle broken faults of the rail vehicle can judge that the axle to be tested 241 is suspected of having a broken axle fault. If the axle to be tested 241 does not satisfy the above-mentioned first broken axle condition, the diagnostic device for broken axle faults of the rail vehicle may rule out the possibility of the broken axle fault on the axle to be tested 241.

If it is judged that the rail vehicle is not in a traction operating condition currently, but in an inert operating condition or a braking operating condition, the diagnostic device for broken axle faults of the rail vehicle can preliminarily judge whether the axle to be tested 241 has the possibility of having a broken axle fault according to the above-mentioned second broken axle condition. If the axle to be tested 241 satisfies the above-mentioned second broken axle condition, the diagnostic device for broken axle faults of the rail vehicle can judge that the axle to be tested 241 is suspected of having a broken axle fault. If the axle to be tested 241 does not satisfy the above-mentioned second broken axle condition, the diagnostic device for broken axle faults of the rail vehicle may rule out the possibility of the broken axle fault on the axle to be tested 241.

After the broken axle fault diagnosis of the axle to be tested 241 is completed, the diagnostic device for broken axle faults of the rail vehicle may continue to diagnose whether another axle 242 of the rail vehicle may have a broken axle fault.

When diagnosing whether the axle to be tested 242 has a broken axle fault, if the axle 241 has been judged as a suspected broken axle in the previous diagnosis process, the diagnostic device for broken axle faults of the rail vehicle may not include the axle 241 within the range of the axles except the axle to be tested 242 in the above-mentioned first broken axle condition. That is to say, when diagnosing whether the axle to be tested 242 has a broken axle fault, even if the actual traction of the axle 241 is less than or equal to the corresponding first traction threshold, it does not affect the diagnostic device for broken axle faults of the rail vehicle to judge that the axle to be tested 242 is suspected of having a broken axle fault. By excluding the axle 241 that is suspected of having a broken axle fault from the diagnosis basis, the interference factor of the broken axles on the diagnosis result can be effectively eliminated, thereby further improving the accuracy of the diagnosis result.

In this way, preliminary diagnosis of broken axles is performed on all axles of the rail vehicle.

When it is determined that one or several axles are suspected of having broken axle fault, for example, when it is judged that the axle to be tested 241 is suspected of having a broken axle fault, the TCMS can control the railway vehicle to stop running and restart or preferably wait for the rail vehicle to stop and start again. The diagnostic device for axle broken faults of the rail vehicle can perform the above-mentioned first broken axle condition judgment on the axles suspected of having broken axles, for example, the axle to be tested 241 again during the process of stopping and restarting the railway vehicle.

When the rail vehicle is stopped in a controlled manner, the axle speeds of the axle to be tested 241 and the other axles 242-246 will all return to zero. By controlling the rail vehicle to stop and start again, the speed sensor signal can be verified once, so as to avoid misjudgments caused by the speed sensor fault. In addition, in the process of controlling the stop and restart of the rail vehicle, it often occurs a longer traction condition or braking condition, and the speed of each axle will change gradually, so it is more beneficial for the judgment of the broken axle fault, so as to improve the accuracy of broken axle diagnosis.

In the process of stopping and restarting of the rail vehicle, if the axle to be tested 241 cannot satisfy the above-mentioned first broken axle condition again, the diagnostic device for broken axle faults of the rail vehicle cannot confirm whether the axle to be tested 241 has a broken axle fault, so the broken axle detection of the axle 241 may not be performed temporarily, to wait for the next stop and restart process to perform the first broken axle condition judgment again. If the axle to be tested 241 satisfies the above-mentioned first broken axle condition again, the diagnostic device for broken axle faults of the rail vehicle can confirm online that the axle to be tested 241 has a broken axle fault, so as to report the broken axle fault of the axle to be tested 241 quickly and accurately, so that the TCMS can protect the rail vehicle in time.

Those skilled in the art can understand that the above-mentioned diagnostic method for axle broken faults of the rail vehicle provided in this embodiment can be implemented in a pure software manner without any additional hardware cost. In addition, the actual traction parameters, axle speed parameters, and rail vehicle speed parameters of each axle involved in the diagnosis process are all necessary information for rail vehicle control, so it is very easy to implement and has good application value.

In a preferred embodiment, in response to the diagnostic device for broken axle faults of the rail vehicle confirming that the axle to be tested 241 has a broken axle fault, the TCMS may also prompt the driver of the rail vehicle to stop for inspection through the display IDU.

In an embodiment of a railway vehicle with broken axle faults, by importing the recorded data of the railway vehicle at the time when the broken axle faults occur into the fault diagnosis model of the invention to perform simulation analysis, then the faulty axle can be located accurately and quickly.

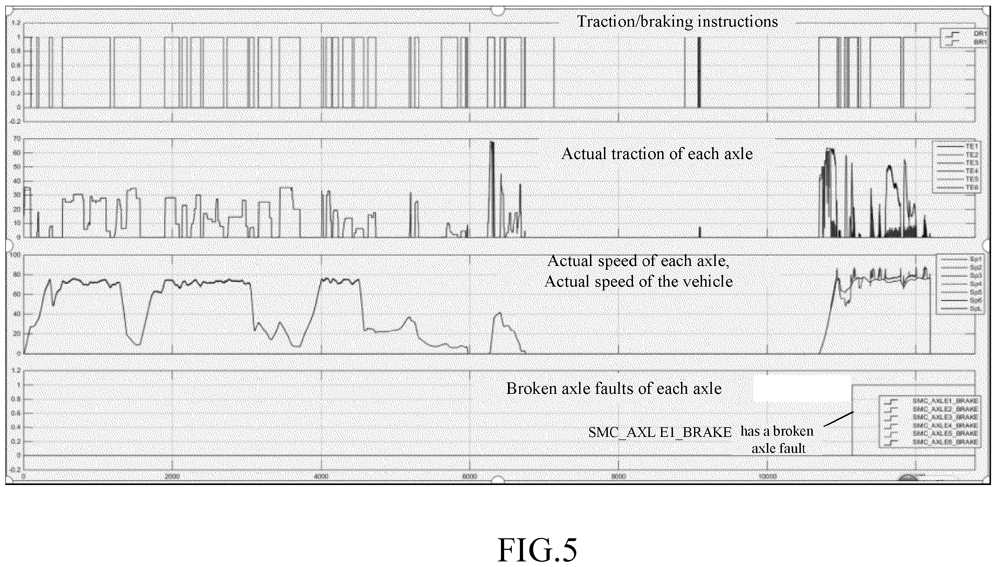

Please refer to Fig. 5, Fig. 5 shows a schematic diagram of a simulation result of a broken axle fault of a rail vehicle according to an embodiment of the present invention.

As shown in Figure 5, the TCMS calculates the current required traction/braking force by collecting positions of the traction/brake handle, so as to provide the corresponding traction/brake orders to each axle SMC_AXL E1_BRAKE-SMC_AXL E6_BRAKE of the rail vehicle. At the same time, the TCMS also collects the actual speed of the railway vehicle in real time, as well as the actual speed and traction of each axle SMC_AXL E1_BRAKE- SMC_AXL E6_BRAKE of the railway vehicle.

By analyzing the actual speed of the rail vehicle, and the actual speed and traction of each axle SMC_AXL E1_BRAKE-SMC_AXL E6_BRAKE of the rail vehicle, it can be found that in the traction conditions of the rail vehicle, the actual traction of the axle SMC_AXL E4_BRAKE is significantly smaller than the actual traction of the other axles, and satisfies the above-mentioned first broken axle condition. Therefore, the simulation results of the broken axle faults of each axle show that the axle SMC_AXL E4_BRAKE has a broken axle fault, which is consistent with the actual result of the broken axle faults of the rail vehicle.

It can be seen that the above-mentioned diagnostic method for broken axle faults of a rail vehicle provided by this embodiment can not only report the broken faults of the axle of the railway vehicle quickly, but also has high reliability and can fully guarantee the safe operation of the train.

Although the method is illustrated and described as a series of actions for the purpose of simplifying the explanation, it should be understood and appreciated that these methods are not limited by the order of the actions. Those skilled in the art may understand that some actions may occur in different orders and/or concurrently with other actions that are illustrated and described herein or that are not illustrated and described herein, in accordance with one or more embodiments.

According to another aspect of the present invention, this article also provides an embodiment of a diagnostic device for broken axle faults of a rail vehicle.

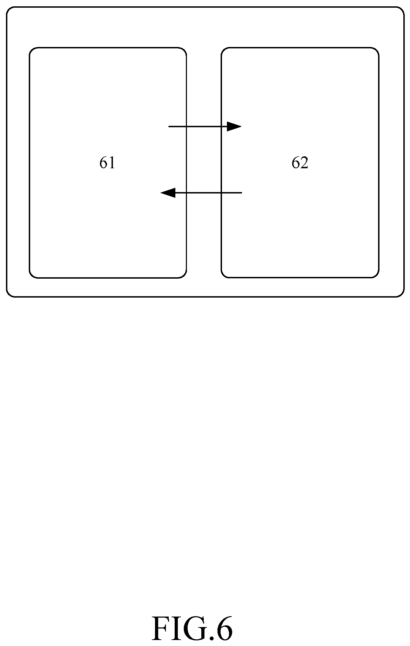

Please refer to Fig. 6, Fig. 6 shows a schematic structural diagram of a diagnostic device for broken axle faults of a rail vehicle according to another aspect of the present invention.

As shown in FIG. 6, the above-mentioned diagnostic device for broken axle faults of a rail vehicle provided by this embodiment can be used for diagnosing broken axle faults of a plurality of wheel axles of a rail vehicle. The diagnostic device may comprise a memory 61 and a processor 62 coupled to the memory. The processor 62 may be configured to implement the diagnostic method for broken axles faults of a rail vehicle provided in any of the above-mentioned embodiments, and is used to report faults quickly and accurately, so as to ensure the safe operation of the train.

Those skilled in the art can understand that although the processor 62 described in the above embodiments may be implemented by a combination of software and hardware. In other embodiments, the processor 62 may also be implemented in software or hardware alone.

For hardware implementation, the processor 62 can be implemented in one or more application-specific integrated circuits (ASIC), digital signal processors (DSP), digital signal processing devices (DAPD), programmable logic devices (PLD), field programmable gate array (FPGA), a processor, a controller, a microcontroller, a microprocessor, other electronic devices for performing the above-mentioned functions, or a selected combination of the above-mentioned devices.

For software implementation, the processor 62 can be implemented by independent software modules such as procedures and functions running on a general-purpose chip, and each module can execute one or more the functions and operations described in this article.

According to another aspect of the present invention, an embodiment of a computer-readable medium is also provided herein.

The above-mentioned computer-readable medium provided in this embodiment may store computer-executable instructions thereon. When the computer-executable instructions are executed by the processor 62, they can implement the diagnostic method for broken axle faults of a rail vehicle provided in any of the above embodiments, and are used to report faults quickly and accurately, so as to ensure the safe operation of the train.

Those skilled in the art can understand that information, signals, and data can be represented by any of a variety of different technologies and techniques. For example, the data, instructions, commands, information, signals, bits (bits), symbols, and chips quoted throughout the above description can be made of voltage, current, electromagnetic waves, magnetic fields or magnetic particles, light fields or optical particles, or any of their combination to express.

Those skilled in the art will further appreciate that the various illustrative logic blocks, modules, circuits, and algorithm steps described in conjunction with the embodiments disclosed herein can be implemented as electronic hardware, computer software, or a combination of the two. In order to clearly explain the interchangeability of hardware and software, various illustrative components, blocks, modules, circuits, and steps are generally described above in terms of their functionality. Whether such functionality is implemented as hardware or software depends on the specific application and design constraints imposed on the overall system. Technicians can implement the described functionality in different ways for each specific application, but such implementation decisions should not be interpreted as causing a departure from the scope of the present invention.

The various illustrative logic modules and circuits described in conjunction with the embodiments disclosed herein can be general-purpose processors, digital signal processors (DSP), application-specific integrated circuits (ASIC), field programmable gate arrays (FPGA) or other programmable logic devices, discrete gates or transistor logic, discrete hardware components, or any combination thereof designed to perform the functions described herein to be implemented or executed. A general-purpose processor may be a microprocessor, but in the alternative, the processor may be any conventional processor, controller, microcontroller, or state machine. The processor may also be implemented as a combination of computing devices, such as a combination of a DSP and a microprocessor, multiple microprocessors, one or more microprocessors cooperating with a DSP core, or any other such configurations.

The steps of the method or algorithm described in combination with the embodiments disclosed herein may be directly embodied in hardware, in a software module executed by a processor, or in a combination of the two. The software module may reside in RAM memory, flash memory, ROM memory, EPROM memory, EEPROM memory, registers, hard disk, removable disk, CD-ROM, or any other forms of storage medium known in the art. An exemplary storage medium is coupled to the processor such that the processor can read information from and write information to the storage medium. In the alternative, the storage medium may be integrated into the processor. The processor and the storage medium may reside in the ASIC. The ASIC may reside in user terminals. In the alternative, the processor and the storage medium may reside as discrete components in user terminals.

In one or more exemplary embodiments, the features described can be implemented in hardware, software, firmware, or any combination of them. If implemented as a computer program product in the software, each function can be stored or transmitted as one or more instructions or code on or through computer-readable media. Computer-readable media includes both computer storage media and communication media, including any media that causes computer programs to move from one place to another. Storage media can be any available media that can be accessed by computers. As an example rather than a qualifier, such computer-readable media may include RAM, ROM, EEPROM, CD-ROM, or other light disk storage, magnetic disk storage, or other magnetic storage devices, or any other media that can be used to carry or store desirable program code in the form of instructions or data structures and that can be accessed by the computer. Any connection is also properly referred to as computer-readable media. For example, if the software is transmitted from a web site, server, or other remote source using coaxial cables, fiber optic cables, twisted pairs, digital subscriber lines (DSLs), or wireless technologies such as infrared, radio, and microwave, that the coaxial cables, fiber optic cables, twisted pairs, DSLs, or wireless technologies such as infrared, radio, and microwave is included in the definition of the medium. Such as the disks and discs used in this article include compact discs (CDs), laser discs, optical discs, digital versatile discs (DVDs), floppy disks, and blu-ray discs, where disks often reproduce data magnetically, while discs use lasers to reproduce data optically. The above combination should also be included in the scope of the computer-readable media.

## Claims

1. A computer implemented diagnostic method for broken axle faults of a rail vehicle, used for diagnosing broken axle faults of a plurality of axles (241-246) of the rail vehicle, the diagnostic method comprises:
judging an operating condition of the rail vehicle;
**characterized in that** the diagnostic method comprises:
in response to the rail vehicle being in the traction operating condition, using one of the plurality of axles (241-246) as an axle to be tested (241) to perform a first broken axle condition judgment, the first broken axle condition comprises: the actual traction force of other axles (242-246) except the axle to be tested (241) is all greater than a first traction threshold, while the actual traction force of the axle to be tested (241) has been continuously smaller than a second traction threshold and the axle speed of the axle to be tested (241) has been continuously greater than the speed of the rail vehicle for up to a first time threshold,
if the first broken axle condition is satisfied, it is judged that the axle to be tested (241) is suspected of having a broken axle fault.

2. The diagnostic method of claim 1, wherein further comprising:
in response to the rail vehicle being in an inert operating condition or a braking operating condition, performing a second broken axle condition judgment on the axle to be tested, the second broken axle condition comprises: the axle speed of the axle to be tested has been continuously lower than the speed of the rail vehicle for up to a second time threshold,
if the second broken axle condition is satisfied, it is judged that the axle to be tested is suspected of having the broken axle fault.

3. The diagnostic method of claim 1 or 2, wherein further comprising:
if it is judged that the axle to be tested is suspected of having the broken axle fault, then performing the first broken axle condition judgment on the axle to be tested again during the stop and restart process,
if the first broken axle condition is satisfied, confirming that the axle to be tested has a broken axle fault.

4. The diagnostic method of claim 3, wherein further comprising:
if the first broken axle condition is not satisfied, then waiting for the next stop and restart process to perform the first broken axle condition judgment again.

5. The diagnostic method of claim 2, wherein further comprising:
if the second broken axle condition is not satisfied, ruling out that the axle to be tested has a broken axle fault.

6. The diagnostic method of claim 1, wherein in the first broken axle condition the other axles except the one to be tested exclude axles that have been judged to be suspected of having the broken axle fault.

7. The diagnostic method of claim 1, wherein further comprising:
before performing the first broken axle condition judgment on the axle to be tested, first judging whether the axle to be tested has a speed sensor fault, if it has the speed sensor fault, not performing broken axle diagnosis on it.

8. The diagnostic method of claim 1, wherein the first traction threshold comprises 60% of the maximum traction that can be exerted by an axle at the current rail vehicle speed, the second traction threshold comprises 20% of the maximum traction that can be exerted by an axle at the current rail vehicle speed.

9. The diagnostic method of claim 2, wherein the axle speed is greater than the speed of the rail vehicle comprises that the axle speed is greater than the speed of the rail vehicle by more than 5km/h, the axle speed is lower than the speed of the rail vehicle comprises that the axle speed is lower than the speed of the rail vehicle by more than 5km/h.

10. The diagnostic method of claim 2, wherein the first time threshold and the second time threshold comprise 10s.

11. A diagnostic device for broken axle faults of a rail vehicle, used for diagnosing broken axle faults of a plurality of axles (241-246) of the rail vehicle,
**characterized in that** the diagnostic device comprises:
a memory; and
a processor coupled to the memory, the processor is configured to perform the method of any one of claims 1-10.

12. A computer-readable medium, having computer-executable instructions stored thereon, **characterized in that** the computer-executable instructions implement the method of any one of claims 1-10 when executed by a processor.

## Patentansprüche

1. Computerimplementiertes Verfahren zur Diagnose eines Achsbruchfehlers bei Schienenfahrzeugen, das zum Diagnostizieren von Achsbruchfehlern einer Vielzahl von Achsen (241-246) des Schienenfahrzeugs verwendet wird,
wobei das Diagnoseverfahren die Schritte umfasst:
Einschätzen eines Betriebszustands des Schienenfahrzeugs;
**dadurch gekennzeichnet,**
**dass** das Diagnoseverfahren umfasst:
als Reaktion darauf, dass sich das Schienenfahrzeug im Traktionsbetriebszustand befindet, Verwenden einer der Vielzahl von Achsen (241-246) als eine zu prüfende Achse (241), um eine Überprüfung der ersten Achsbruchbedingung durchzuführen, wobei die erste Achsbruchbedingung umfasst, dass die tatsächliche Traktion der anderen Achsen (242-246) mit Ausnahme der zu prüfenden Achse (241) alle größer als ein erster Traktionsschwellenwert ist, während die tatsächliche Traktionskraft der zu prüfenden Achse (241) kontinuierlich kleiner als ein zweiter Traktionsschwellenwert war und die Achsgeschwindigkeit der zu prüfenden Achse (241) bis zu einem ersten Zeitschwellenwert kontinuierlich größer als die Geschwindigkeit des Schienenfahrzeugs war,
und **dass**, wenn die erste Achsbruchbedingung erfüllt ist, festgestellt wird, dass die zu prüfende Achse (241) im Verdacht steht, einen Achsbruchfehler zu haben.

2. Verfahren zur Diagnose, nach Anspruch 1, wobei das Verfahren ferner Folgendes umfasst:
als Reaktion darauf, dass sich das Schienenfahrzeug in einem ruhenden Betriebszustand oder einem Bremsbetriebszustand befindet, eine Überprüfung der zweiten Achsbruchbedingung der zu prüfenden Achse durchgeführt wird, wobei die zweite Achsbruchbedingung Folgendes umfasst: die Achsgeschwindigkeit der zu prüfenden Achse war bis zu einem zweiten Zeitschwellenwert kontinuierlich niedriger als die Geschwindigkeit des Schienenfahrzeugs,
wenn die zweite Achsbruchbedingung erfüllt ist, wird entschieden, dass die zu prüfende Achse im Verdacht steht, den Achsbruchfehler aufzuweisen.

3. Verfahren zur Diagnose, nach Anspruch 1 oder Anspruch 2, wobei das Verfahren ferner Folgendes umfasst:
wenn festgestellt wird, dass die zu prüfende Achse im Verdacht steht, den Achsbruchfehler zu haben, dann erneut Durchführung der ersten Achsbruchbedingungsbeurteilung an der zu prüfenden Achse während des Stopp- und Neustartprozesses,
wenn die erste Achsbruchbedingung erfüllt ist, Bestätigung, dass die zu prüfende Achse einen Achsbruchfehler hat.

4. Verfahren zur Diagnose, nach Anspruch 3, wobei das Verfahren ferner Folgendes umfasst:
wenn die erste Achsbruchbedingung nicht erfüllt ist, wird auf den nächsten Stopp- und Neustartvorgang gewartet, um die Beurteilung der ersten Achsbruchbedingung erneut durchzuführen.

5. Verfahren zur Diagnose, nach Anspruch 2, wobei das Verfahren ferner umfasst:
wenn die zweite Achsbruchbedingung nicht erfüllt ist, auszuschließen, dass die zu prüfende Achse einen Achsbruchfehler aufweist.

6. Verfahren zur Diagnose, nach Anspruch 1,
wobei im ersten Achsbruchzustand, die anderen Achsen, mit Ausnahme der zu prüfenden Achse, Achsen ausgeschlossen werden, bei denen der Verdacht auf einen Achsbruchfehler festgestellt wurde.

7. Verfahren zur Diagnose, nach Anspruch 1, wobei das Verfahren ferner umfasst:
vor der Durchführung der Beurteilung der ersten Achsbruchbedingung an der zu prüfenden Achse wird zunächst beurteilt, ob die zu prüfende Achse einen Geschwindigkeitssensorfehler aufweist, und wenn sie den Geschwindigkeitssensorfehler aufweist, keine Achsbruchdiagnose an ihr durchgeführt wird.

8. Verfahren zur Diagnose nach Anspruch 1, wobei der erste Traktionsschwellenwert 60% der maximalen Traktion umfasst, die von einer Achse bei der aktuellen Schienenfahrzeuggeschwindigkeit ausgeübt werden kann, und der zweite Traktionsschwellenwert 20% der maximalen Traktion umfasst, die von einer Achse bei der aktuellen Schienenfahrzeuggeschwindigkeit ausgeübt werden kann.

9. Verfahren zur Diagnose, nach Anspruch 2, wobei der Umstand, dass die Achsgeschwindigkeit größer ist als die Geschwindigkeit des Schienenfahrzeugs, umfasst, dass die Achsgeschwindigkeit um mehr als 5km/h größer ist als die Geschwindigkeit des Schienenfahrzeugs, und der Umstand, dass die Achsgeschwindigkeit kleiner ist als die Geschwindigkeit des Schienenfahrzeugs, umfasst, dass die Achsgeschwindigkeit um mehr als 5km/h kleiner ist als die Geschwindigkeit des Schienenfahrzeugs.

10. Verfahren zur Diagnose nach Anspruch 2, wobei die erste Zeitschwelle und die zweite Zeitschwelle 10s umfassen.

11. Diagnosevorrichtung für Achsbruchfehler eines Schienenfahrzeugs, die zur Diagnose von Achsbruchfehlern einer Vielzahl von Achsen (241-246) des Schienenfahrzeugs verwendet wird,
**dadurch gekennzeichnet, dass** die Diagnosevorrichtung umfasst:
einen Speicher; und
einen mit dem Speicher gekoppelten Prozessor, wobei der Prozessor so konfiguriert ist, dass er das Verfahren nach einem der Ansprüche 1-10 durchführt.

12. Computerlesbares Medium, auf dem computerausführbare Befehle gespeichert sind, **dadurch gekennzeichnet, dass** die computerausführbaren Befehle das Verfahren nach einem der Ansprüche 1-10 implementieren, wenn sie von einem Prozessor ausgeführt werden.

## Revendications

1. Procédé de diagnostic mis en œuvre par ordinateur pour des défauts d'essieux cassés d'un véhicule ferroviaire, utilisé pour diagnostiquer des défauts d'essieux cassés d'une pluralité d'essieux (241-246) du véhicule ferroviaire, le procédé de diagnostic comprend:
le jugement d'une condition de fonctionnement du véhicule ferroviaire;
**caractérisé en ce que** le procédé de diagnostic comprend:
en réponse à ce que le véhicule ferroviaire est dans la condition de fonctionnement de traction, l'utilisation d'un de la pluralité d'essieux (241-246) comme essieu à tester (241) pour réaliser un premier jugement de condition d'essieu cassé, la première condition d'essieu cassé comprend: la force de traction réelle d'autres essieux (242-246), à l'exception de l'essieu à tester (241), est supérieure à un premier seuil de traction, tandis que la force de traction réelle de l'essieu à tester (241) a été continuellement inférieure à un deuxième seuil de traction et la vitesse d'essieu de l'essieu à tester (241) a été continuellement supérieure à la vitesse du véhicule ferroviaire pendant jusqu'à un premier seuil de temps,
si la première condition d'essieu cassé est satisfaite, il est jugé que l'essieu à tester (241) est suspecté d'avoir
un défaut d'essieu cassé.

2. Procédé de diagnostic selon la revendication 1, comprenant en outre:
en réponse à ce que le véhicule ferroviaire est dans une condition de fonctionnement inerte ou dans une condition de fonctionnement de freinage, réaliser un deuxième jugement de condition d'essieu cassé sur l'essieu à tester, la deuxième condition d'essieu cassé comprend: la vitesse d'essieu de l'essieu à tester a été continuellement inférieure à la vitesse du véhicule ferroviaire pendant jusqu'à un deuxième seuil de temps,
si la deuxième condition d'essieu cassé est satisfaite, il est jugé que l'essieu à tester est suspecté d'avoir le défaut d'essieu cassé.

3. Procédé de diagnostic selon la revendication 1 ou 2, comprenant en outre:
s'il est jugé que l'essieu à tester est suspecté d'avoir le défaut d'essieu cassé, réaliser le premier jugement de condition d'essieu cassé sur l'essieu à tester à nouveau pendant le processus d'arrêt et de redémarrage,
si la première condition d'essieu cassé est satisfaite, confirmer que l'essieu à tester a un défaut d'essieu cassé.

4. Procédé de diagnostic selon la revendication 3, comprenant en outre:
si la première condition d'essieu cassé n'est pas satisfaite, attendre le prochain processus d'arrêt et redémarrage pour réaliser à nouveau le premier jugement de condition d'essieu cassé.

5. Procédé de diagnostic selon la revendication 2, comprenant en outre:
si la deuxième condition d'essieu cassé n'est pas satisfaite, exclure que l'essieu à tester a un défaut d'essieu cassé.

6. Procédé de diagnostic selon la revendication 1, dans lequel, dans la première condition d'essieu cassé, les autres essieux, à l'exception de celui à tester, excluent les essieux qui ont été jugés comme suspectés d'avoir le défaut d'essieu cassé.

7. Procédé de diagnostic selon la revendication 1, comprenant en outre:
avant de réaliser le premier jugement de condition d'essieu cassé sur l'essieu à tester, juger d'abord si l'essieu à tester a un défaut de capteur de vitesse, s'il a le défaut de capteur de vitesse, ne pas réaliser de diagnostic d'essieu cassé sur lui.

8. Procédé de diagnostic selon la revendication 1, dans lequel le premier seuil de traction comprend 60 % de la traction maximale qui peut être exercée par un essieu à la vitesse actuelle du véhicule ferroviaire, le deuxième seuil de traction comprend 20 % de la traction maximale qui peut être exercée par un essieu à la vitesse actuelle du véhicule ferroviaire.

9. Procédé de diagnostic selon la revendication 2, dans lequel la vitesse d'essieu est supérieure à la vitesse du véhicule ferroviaire comprend que la vitesse d'essieu est supérieure à la vitesse du véhicule ferroviaire de plus de 5 km/h, la vitesse d'essieu est inférieure à la vitesse du véhicule ferroviaire comprend que la vitesse d'essieu est inférieure à la vitesse du véhicule ferroviaire de plus de 5 km/h.

10. Procédé de diagnostic selon la revendication 2, dans lequel le premier seuil de temps et le deuxième seuil de temps comprennent 10 s.

11. Dispositif de diagnostic pour des défauts d'essieux cassés d'un véhicule ferroviaire, utilisé pour diagnostiquer des défauts d'essieux cassés d'une pluralité d'essieux (241-246) du véhicule ferroviaire,
**caractérisé en ce que** le dispositif de diagnostic comprend:
une mémoire; et
un processeur couplé à la mémoire, le processeur est configuré pour réaliser le procédé selon l'une quelconque des revendications 1 à 10.

12. Support lisible par ordinateur, ayant des instructions exécutables par ordinateur stockées sur lui, **caractérisé en ce que** les instructions exécutables par ordinateur mettent en œuvre le procédé selon l'une quelconque des revendications 1 à 10 lorsqu'elles sont exécutées par un processeur.
